# EUROPEAN PATENT SPECIFICATION

(11) **EP 3 505 790 B1**
(45) Date of publication and mention of the grant of the patent: **18.11.2020**
(21) Application number: 18020656.7
(22) Date of filing: 24.12.2018
(51) Int. Cl.: F16G 5/16

(54) **A TRANSVERSE SEGMENT FOR A DRIVE BELT FOR A CONTINUOUSLY VARIABLE TRANSMISSION AND A DRIVE BELT INCLUDING IT**
QUERSEGMENT FÜR EINEN ANTRIEBSRIEMEN FÜR EIN STUFENLOSES GETRIEBE UND ANTRIEBSRIEMEN DAMIT
SEGMENT TRANSVERSAL DE COURROIE D'ENTRAÎNEMENT POUR UNE TRANSMISSION À VARIATION CONTINUE ET COURROIE D'ENTRAÎNEMENT L'INCLUANT

(30) Priority: 30.12.2017 NL 1042703
(43) Date of publication of application: 03.07.2019
(73) Proprietor: Robert Bosch GmbH, 70442 Stuttgart (DE)
(72) Inventor: Lamers, Geert, 5000AM Tilburg (NL); Goorts, Walter, 5000AM Tilburg (NL); de Kuijper, Dirk-Jan, 5000AM Tilburg (NL); van den Heuvel, Robert, 5000AM Tilburg (NL); Rompen, Giel, 5000AM Tilburg (NL); Jonkers, Joost, 5000AM Tilburg (NL); Schnackers, Joost, 5000AM Tilburg (NL)
(74) Representative: Plevier, Gabriël Anton Johan Maria

(56) References cited:
- EP-A2- 0 468 770
- WO-A1-2011/076233
- WO-A1-2018/212138
- WO-A2-2008/072069
- JP-U- S59 103 944

## Description

This disclosure relates to a transverse segment that is destined to be part of a drive belt for a continuously variable transmission with two pulleys and the drive belt. Such a drive belt is commonly known and is mainly applied running around and between the two transmission pulleys, which pulleys each define a V-groove of variable width wherein a respective circumference part of the drive belt is held.

A known type of drive belt comprises an essentially contiguous row of transverse segments made of steel that are mounted on and around the circumference of a number of endless bands or rings that are mutually stacked in the radial direction and that are likewise made of steel. Each such transverse segment defines a central opening that is open towards the radial outside of the drive belt and that accommodates and confines a respective circumference section of such ring stack, while allowing the transverse segments to move along the circumference thereof. This particular type of drive belt is known, for example, from the British patent number GB1286777 and the international patent publications Nos. WO2015169817-A1 and WO2015177372-A1.

In the above and the below description the axial, radial and circumference directions are defined relative to the drive belt when placed in a circular posture. A thickness direction and dimension of the transverse segments is defined in the circumference direction of the drive belt, a height direction and dimension of the transverse segment is defined in the said radial direction and a width direction and dimension of the transverse segment is defined in the said axial direction. A thickness dimension of the ring stack is defined in the said radial direction and a width dimension of the ring stack is defined in the said axial direction.

The known transverse segment comprises a base part and two pillar parts that extend from the base part at either axial side thereof in radial outward, i.e. height direction. The said central opening accommodating the ring stack is defined by and between the base part and the two pillar parts. In between the pillar parts, the said opening is bound in radial inward direction by an upper boundary surface of the base part. A middle section of this boundary surface is in contact with and supports the ring stack from the radial inside thereof, at least at the transmission pulleys. Such middle section of the boundary surface is typically convexly curved, i.e. is crowned, such that during operation of the drive belt the ring stack is urged towards the peak of such crowning. Transition sections of the boundary surface are provided to the axial sides of such middle section, each forming a transition between the middle section of the boundary surface and a side surface of a respective pillar part facing the central opening. Typically such transition section of the boundary surface includes a convexly curved region adjoining the likewise convexly curved middle section and a concavely curved region adjoining the said side surface of the pillar part. It is noted that, although the boundary surface and the transition section both include convexly curved regions, the latter is curved according to a much (e.g. by factor of 0.1 or less) smaller radius of curvature than the former. The width of the ring stack can be somewhat larger than a width of the middle section of the boundary surface, as this allows the design of the drive belt to be as compact as possible. In this case, a gap will be present between the ring stack and the transition section in radial direction, due to the relatively sharp curvature of the transition section of the boundary surface relative to the curvature of the middle section thereof, which middle section determines the width-wise curvature of the ring stack, at least when the boundary surface is pressed in radially outward direction against the radial inside of the ring stack during operation of the drive belt.

The pillar parts of the known transverse segment are both provided with axially extending hook parts or a cross member is provided between them to either partly of fully close-off the central opening to the radial outside of the drive belt and thus to securely contain the ring stack therein.

As seen in the radial direction, an outer portion of the transverse segment is provided with an essentially constant thickness, whereas a thickness of an inner portion thereof decreases in radially inward direction. In between the said inner and outer portions, a front main body surface of the transverse segment includes a width-wise extending surface part that is curved in radial direction and that is often referred to in the art as a rocking edge or a tilting edge. The rocking edge allows adjacent transverse segments in the drive belt to mutually rotate about the horizontal direction, while these remain in contact at the rocking edge, whereby the drive belt as a whole follows a curved trajectory at the transmission pulleys. Although the rocking edge can be located in the base part of the transverse segment, it is preferably provided in the pillar parts thereof.

When the drive belt rotates in the transmission during operation, the individual rings of the ring stack often slip, i.e. move, relative to one another in circumference direction. At the same time the rings of the ring stack are forced into contact by a tensioning of the ring stack that is required for the transmission to transmit torque. Such ring slip is thus accompanied by friction (power) losses. For minimizing such belt-internal friction losses and for avoiding excessive wear of rings due to such slip, lubricant is supplied to the drive belt during operation of the transmission. Some of this lubricant ends up between the rings of the ring stack, lubricating the slipping contact there between.

In the above, known design of the drive belt, the thus required flow of the lubricant is severely hampered by the design of the transverse segments. In particular, when originating from the radial inside of the drive belt, such flow is largely obstructed by the contact between the adjacent transverse segments at the rocking edges thereof. Whereas, when originating from the radial outside or the axial sides of the drive belt, such flow is largely obstructed by the pillar parts and the hook parts of the transverse segment. As a result, the friction between the rings of the ring stack can be undesirably high and/or undesirable wear thereof can occur during operation of the drive belt in the transmission. To address this issue, i.e. to realize that the lubricant can more easily arrive at the ring stack it is known in the art, a/o from JPS59103944-U and EP0468770-A2, to provide a relatively recessed channel in the base part of the transverse segment between the boundary surface and a position on the base part radially inward of the rocking edge. According to JPS59103944-U such channel adoins a central part of the boundary surface, whereas according to EP0468770-A2 such channel adjoins an edge part of the boundary surface.

The present disclosure aims to improve the flow or at least the access of the lubricant to the boundary surface. According to the present disclosure, the base part is provided with a recessed area that in radial direction adjoins the boundary surface and extends to radial inward of the rocking edge and that in axial direction extends along and adjoins the boundary surface over the full axial width thereof. With the transverse segment according to the present disclosure, the lubricant can favourably flow from the radial inside of the drive belt to the radial inside of the ring stack and the boundary surface over the full axial width of the ring stack including both axial sides thereof.

A reduced thickness of the transverse segment at the recessed area is measured axially in line the rocking edge segments located on either side thereof. In particular, such reduced thickness at the recessed area is defined relative to the thickness at the rocking edge and preferably amounts to between 0.02 and 0.25 mm. That is to say that the thickness of the transverse segment in the recessed area is between 0.02 and 0.25 mm less than such thickness at the rocking edge, preferably is between 0.05 and 0.10 mm less, more preferably is around 0.07 mm less.

In order to minimize a detrimental influence of the recessed area on, in particular, the fatigue strength of the transverse segment, the recessed area smoothly merges with other parts of the respective principal face of the transverse segment that is provided therewith. For example, the said reduced thickness at the recessed area is gradually increased from zero (i.e. no thickness reduction), at a location where the recessed area adjoins the pillar parts of the transverse segment, to a nominal value thereof. In between such sub-areas of gradual thickness reduction of the recessed area, the thickness of the transverse segment is essentially constant. Preferably also, the said gradual thickness reduction extends in axial direction over the axial extend of the respective transition sections of the boundary surface, preferably over at least two, up to four times such axial extend.

Furthermore, the recessed area is preferably provided in the said front main body surface of the transverse segment that also is provided with the rocking edge. In this case, the recessed area is preferably oriented at an angle relative to the, opposite, i.e. rear main body surface of the transverse segment in radial direction. This latter angle preferably corresponds to a maximum angle of mutual inclination of two adjacent transverse segments in the drive belt during operation thereof in the transmission. As a result, the channel formed by the recessed area between the adjacent transverse segments favourably does not narrow in radial inward direction, when these are maximally inclined relative to one another in a curved section of the drive belt.

The recessed area is preferably pressure-formed as part of the cutting-out from a basic material of the transverse segment in the well-known and typically applied fine-blanking process.

The above novel transverse segment design according to the present disclosure will now be explained further with reference to the drawing, in which:
- figure 1 is a simplified and schematic side elevation of a transmission with two pulleys and a drive belt consisting of a ring stack and a row of transverse segments mounted on the ring stack along the circumference thereof;
- figure 2 schematically illustrates the drive belt in accordance with known art in a cross-section thereof facing in its circumference direction and also includes a separate, transverse cross-section of only the transverse segment thereof;
- figure 3 schematically illustrates a section of the known transverse segment in an enlargement;
- figure 4 schematically illustrates a novel transverse segment in a first embodiment thereof according to the present disclosure
- figure 5 schematically illustrates a novel transverse segment in a second embodiment thereof according to the present disclosure
- figure 6 schematically illustrates the novel transverse segment of figure 5 in a cross-section thereof.

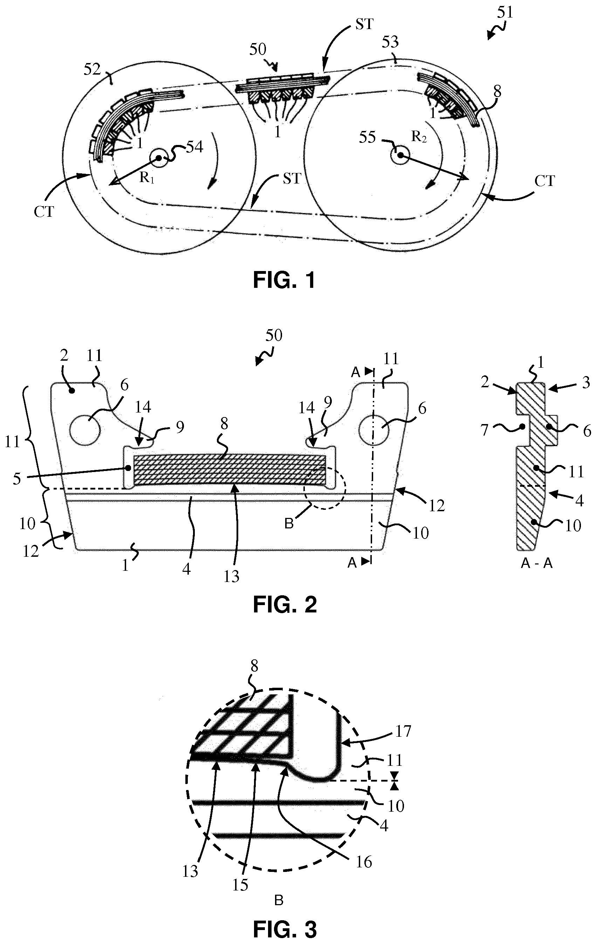

Figure 1 schematically shows, in a cross-section thereof, the central parts of a continuously variable transmission 51 for use in a driveline of, for example, passenger motor vehicles. This transmission 51 is well-known and comprises at least a first variable pulley 52 and a second variable pulley 53. In the driveline, the first pulley 52 is coupled to and driven by a prime mover, such as an electric motor or a combustion engine, and the second pulley 53 is typically coupled to and drives a driven wheel of the motor vehicle via a number of gears.

The transmission pulleys 52, 53 each typically comprise a first conical pulley sheave that is fixed to a pulley shaft 54, 55 of the respective pulley 52, 53 and a second conical pulley sheave that is axially displaceable relative to the respective pulley shaft 54, 55 and that is fixed thereto only in rotational direction. A drive belt 50 of the transmission 51 is wrapped around the pulleys 52, 53, while being accommodated between the pulley sheaves thereof. As appears from figure 1, the trajectory of the drive belt 50 in the transmission 51 includes two straight parts ST and two curved parts CT where the drive belt 50 is wrapped around a respective one of the two transmission pulleys 52, 53. The drive belt 50 is composed of a ring stack 8 and a plurality of transverse segments 1 that are mounted on the ring stack 8 along the circumference thereof in an, at least essentially, contiguous row. For the sake of simplicity, only a few of these transverse segments 1 are shown in figure 1, which transverse segments 1 are, moreover, not drawn to scale in relation to, for example, the diameter of the pulleys 52, 53.

In the drive belt 50, the transverse segments 1 are movable along the circumference of the ring stack 8, which ring stack 8 is typically composed of a number of relatively thin and flexible endless metal bands or rings that are mutually nested. During operation of the transmission 51, the transverse segments 1 of the drive belt 50 can be driven by the first pulley 52 in the direction of rotation thereof by friction. These driven transverse segments 1 push preceding transverse segments 1 in the circumference direction of the ring stack 8 of the drive belt 50 and, ultimately, rotationally drive the second pulley 53, again by friction. In order to generate such friction (force) between the transverse segments 1 and the transmission pulleys 52, 53, the said pulley sheaves of each pulley 52, 53 are forced towards each other, whereby these exert a pinching force on the transverse segments 1 in the axial direction thereof. To this end, electronically controllable and hydraulically acting movement means (not shown) that act on the moveable pulley sheave of each pulley 52, 53 are provided in the transmission 51. This movement means also control respective radial positions R1 and R2 of the drive belt 50 at the pulleys 52, 53 and, hence, the speed ratio that is provided by the transmission 51 between the pulley shafts 54, 55 thereof.

In figure 2 the known drive belt 50 is schematically illustrated. On the left side of figure 2 the drive belt 50 is shown in cross-section and on the right side of figure 2 a side elevation of only the transverse segment 1 thereof is included. From figure 2 it appears that the transverse segments 1 of the drive belt 50 are generally shaped similar to the letter "V", i.e. are generally V-shaped. In other words, side faces 12 of the transverse segments 1 through which it arrives in (friction) contact with the transmission pulleys 52, 53, are mutually oriented at an angle that closely matches an angle that is present between the conical pulley sheaves of these pulleys 52, 53. The pulley contact faces 12 of the transverse segment 1 are either corrugated by a macroscopic profile or are provided with a rough surface structure, such that only the higher lying peaks of the corrugation profile or of the surface roughness arrive in contact with the transmission pulleys 52, 53. This particular feature of the transverse segment design provides that the friction between the drive belt 50 and the transmission pulleys 52, 53 is optimised by allowing cooling oil that is applied in the known transmission 51 to be accommodated in the lower lying parts of the corrugation profile or of the surface roughness.

Each transverse segment 1 defines a base part 10 and two pillar parts 11, whereof the base part 10 extends mainly in the axial direction of the drive belt 50 and whereof the pillar parts 11 extend mainly in the radial direction of the drive belt 50, each from a respective axial side of the base part 10. In its thickness direction, each transverse segments 1 extends between a front surface 2 and a rear surface 3 thereof that are both oriented, at least generally, in the circumference direction of the drive belt 50. An opening 5 is defined centrally between the pillar parts 11 and the base part 10 of each transverse segment 1, wherein a circumference section of the ring stack 8 is accommodated. In radial outward direction the central opening 5 is partly closed-off by two hook parts 9 of the transverse segment 1 that each extend from a respective pillar part 11 in axial direction towards the respectively opposite pillar part 11. Thus, a radially inward facing surface part, i.e. bottom surface 14 of each hook part 9 confines the ring stack to the central opening 5 of the transverse segment 1 in radial outward direction. A radially outward facing part of the circumference surface of the base part 10, extending between the pillar parts 11, forms the radially inner boundary of the central opening 5 is denoted boundary surface 13 hereinafter.

Both pillar parts 11 of the transverse segment 1 are provided with a stud 6 that protrudes in thickness direction from the front surface 2 of the transverse segment 1 and with a corresponding hole 7 in the opposite side of the respective pillar part 11, i.e. in the rear surface 3 of the transverse segment 1. In the drive belt 50, the studs 6 of a first transverse segment 1 are received in the holes 7 of a second, adjacent transverse segment 1. By this engagement of the studs 6 and the holes 7 of adjacent transverse segments 1, the transverse segments 1 mutually link to and align one another in the said row thereof in the drive belt 50.

Also in the said row of transverse segments 1 in the drive belt 50, at least a part of the front surface 2 of a first transverse segment 1 abuts against at least a part of the rear surface 3 of a second, adjacent transverse segment 1. Abutting transverse segments 1 are able to tilt relative to one another, while remaining in mutual contact at and through an axially extending, convexly curved surface part 4 of the front surface 2 thereof, which surface part 4 is denoted rocking edge 4 hereinafter. Below, i.e. radially inward of such tiling edge 4, the transverse segments 1 are tapered, as can been seen in the side elevation thereof in figure 2, to allow for such relative rocking without interference between the respective base parts 10 of the abutting transverse segments 1 below the rocking edges 4 thereof. It is noted that, although in figure 2 the rocking edge 4 is located in the base part 10 of the transverse segment 1, it is also known to at least partly locate the rocking edge 4 in the pillar parts 11 of the transverse segment 1.

As illustrated in figure 2 and, in more detail, in the enlargement of area B of figure 2 in figure 3, only a middle section 15 of the boundary surface 13 arrives in contact with and supports the ring stack 8 from its radial inside. Such middle section 15 of the boundary surface 13 is convexly curved, such that during operation of the drive belt 50 in the transmission 51 the ring stack 1 is urged towards the middle of the boundary surface 13. A transition section 16 of the boundary surface 13 is provided to both axial sides of the middle section 15, each transition section 16 forming a transition between such middle section 15 and a side surface 17 of a respective pillar part 11 that faces the central opening 5. The transition sections 16 include a relatively sharply convexly curved region that adjoins the said middle section 15 and a concavely curved region that adjoins the side surface 17 of the respective pillar part 11. It is noted that as illustrated in figure 3, the side surface 17 of the pillar part 11 includes a straight section that connects to the concavely curved region of the transition section 16 of the boundary surface 13 via a likewise concavely curved region of the said side surface 17.

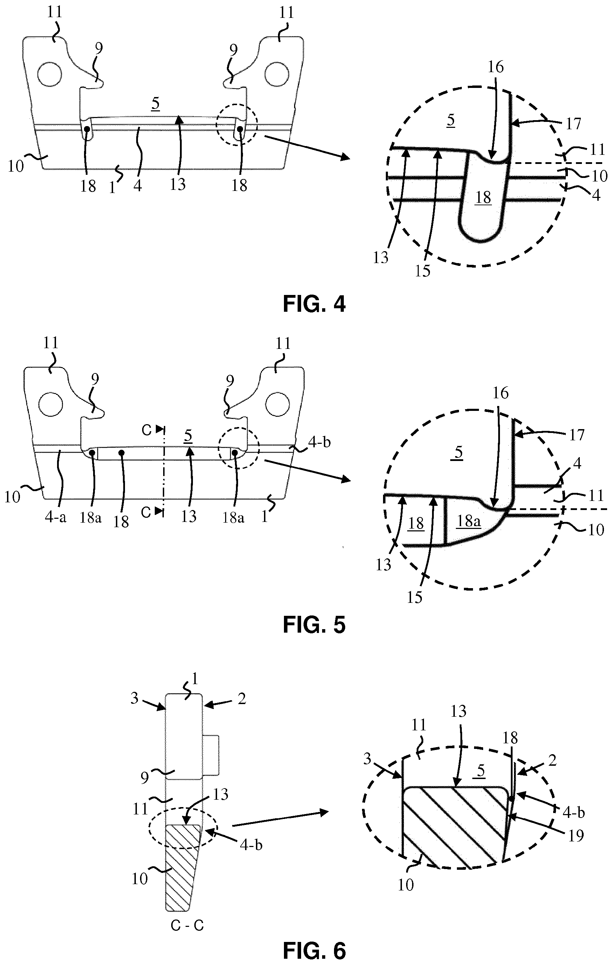

In the known drive belt 50, a flow of lubricant, supplied to the radial inside thereof during operation, towards the sliding contact between the boundary surface 13 of the transverse segment 1 and the ring stack 8 is largely blocked by the contact between adjacent transverse segments 1, mutually abutting at their rocking edges 4. According to the present disclosure, for improving such lubricant flow, the base part 10 is provided with a recessed area 18 that adjoins at least both transition sections 16 of the boundary surface 13 and that extends from such boundary surface to radial inward of the rocking edge 4, as is schematically illustrated in figure 4. This recessed area 18 provides for a channel for lubricant flow in radial direction between the mutually abutting transverse segments 1.

Figure 5 illustrates an alternative embodiment of the transverse segment 1 according to the present disclosure. In the embodiment of figure 5, the recessed area 18 not only adjoins the said transition sections 16, but also extends there between over the full width of the middle section 15 of the boundary surface 13. Also in figure 5, the rocking edge 4 is shown to be located partly in the pillar parts 11 and partly in base part 10 of the transverse segment 1. In the base part 10, the rocking edge 4 is divided in two sections 4-a and 4-b by the provision of the recessed area 18 there between. On either axial side thereof, the recessed area 18 smoothly merges with the rocking edge sections 4-a, 4-b by a gradually decreasing depth of a sub-area 18a thereof. In between such sub-areas 18a of gradual thickness reduction, the thickness of the transverse segment 1, i.e. the thickness reduction provided by the recessed area 18, is essentially constant.

In figure 6 this latter embodiment of the transverse segment 1 according to the present disclosure is illustrated in cross-section C-C. In figure 6 it is shown that the recessed area 18 adjoins the boundary surface 13 and extends in radial inward direction. A surface part 19 of the front surface 2 of the transverse segment 1 constituting the recessed area 18 is shown to be angled in radial direction relative to the rear main body surface 3. In this way, the channel for lubricant formed by the recessed area 18 between the adjacent segments 1 in the drive belt 50 favourably does not narrow in radial inward direction, when these segments 1 are maximally inclined relative to one another in a curved section of the drive belt 50. Optimally, the recessed area surface 19 of the recessed area 18 is oriented at an angle of about 3 degrees up to about 4 degrees relative to the rear main body surface 3, which angle corresponds to the typical maximum angle of mutual inclination of two adjacent transverse segment 1 in the drive belt 50 during operation thereof in the transmission.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. A transverse segment (1) for a drive belt (50) with a ring stack (8) and with a number of transverse segments (1) that are slidably arranged on the ring stack (8), which transverse segment (1) in thickness direction extends between a front surface (2) and a rear surface (3) thereof and which transverse segment (1) comprises a width-wise extending base part (10), two pillar parts (11), extending upwards in height direction from either side of the base part (10), and two hook parts (9), each extending from a respective pillar part (11) in the general direction of the other pillar part (11), the transverse segment (1) is provided with a rocking edge (4), in the form of a width-wise extending, convexly curved part of the front surface (2) thereof, and its base part (10) is provided with an upward facing boundary surface (13) between the pillar parts (11), having a centrally located middle section (15), for arriving in contact with the ring stack (8) in the drive belt (50), and having two, at least partly, concavely curved transition sections (16), one provided on either side of the middle section (15) for connecting with a side surface (17) of a respective pillar part (11) facing the central opening (5), which base part (10) is further provided with a recessed area (18) of locally reduced thickness of the transverse segment (1) between the front surface (2) and rear surface (3) thereof, which recessed area (18) adjoins the middle section (15) of the boundary surface (13) and which recessed area (18) extends downwards in height direction to below a position in height direction of the rocking edge (4), wherein the recessed area (18) extends along and adjoins the boundary surface (13) over the full width thereof between the pillar parts (11) including the said concavely curved transition sections (16) thereof.

2. The transverse segment (1) according to claim 1, **characterized in that**, the thickness of the transverse segment (1) at the recessed area (18) is between 0.02 mm and 0.25 mm less and preferably between 0.05 mm and 0.1 mm less than at the rocking edge (4).

3. The transverse segment (1) according to a preceding claim, **characterized in that**, in width direction, the recessed area (18) smoothly merges with other parts of the transverse segment (1) through a sub-area (18a) of the recessed area (18) providing a thickness reduction that gradually reduces from a nominal thickness reduction provided by the recessed area (18) to zero.

4. The transverse segment (1) according to claim 3, **characterized in that**, in width direction, the sub-area (18a) of the recessed area (18) extends over at least the width of the transition sections (16) of the boundary surface (13).

5. The transverse segment (1) according to a preceding claim, **characterized in that**, the recessed area (18) is provided in the front surface (2) of the transverse segment (1), interrupting the rocking edge (4) and dividing it into at least two sections (4-a, 4-b) .

6. The transverse segment (1) according to claim 5, **characterized in that**, in height direction, the rocking edge (4) extends partly in the pillar parts (11) and partly in the base part (10).

7. The transverse segment (1) according to a preceding claim, **characterized in that** a surface part (19) of the front surface (2) constituting the recessed area (18) is angled towards the rear surface (3), as seen from the boundary surface (13) downwards in height direction.

8. The transverse segment (1) according to claim 7, **characterized in that**, the recessed area surface (19) is angled at an angle in the range from about 3 to about 4 degrees relative to the rear surface (3) .

## Patentansprüche

1. Quersegment (1) für einen Antriebsriemen (50) mit einem Ringstapel (8) und einer Anzahl von Quersegmenten (1), die auf gleitende Weise auf dem Ringstapel (8) angeordnet sind, wobei sich das Quersegment (1) in der Dickenrichtung zwischen einer vorderen Fläche (2) und einer hinteren Fläche (3) desselben erstreckt und wobei das Quersegment (1) einen sich in der Breite erstreckenden Basisteil (10), zwei Säulenteile (11), die sich in der Höhenrichtung von jeder Seite des Basisteils (10) nach oben erstrecken, und zwei Hakenteile (9) umfasst, die sich jeweils von einem entsprechenden Säulenteil (11) in der allgemeinen Richtung des anderen Säulenteils (11) erstrecken, wobei das Quersegment (1) mit einer Kippkante (4) in Form eines sich in der Breite erstreckenden, konvex gekrümmten Teils der vorderen Fläche (2) desselben versehen ist und sein Basisteil (10) mit einer nach oben gewandten Grenzfläche (13) zwischen den Säulenteilen (11), die einen mittig gelegenen Mittelabschnitt (15) aufweisen, versehen ist, um in Kontakt mit dem Ringstapel (8) den Antriebsriemen (50) zu erreichen, und zwei wenigstens zum Teil konkav gekrümmte Übergangsabschnitte (16) aufweist, von denen einer auf jeder Seite des Mittelabschnitts (15) vorgesehen ist, um sich mit einer Seitenfläche (17) eines entsprechenden Säulenteils (11), die der mittleren Öffnung (5) zugewandt ist, zu verbinden, wobei der Basisteil (10) ferner mit einem vertieften Bereich (18) einer lokal reduzierten Dicke des Quersegments (1) zwischen der vorderen Fläche (2) und der hinteren Fläche (3) desselben versehen ist, wobei der vertiefte Bereich (18) an den Mittelabschnitt (15) der Grenzfläche (13) angrenzt und wobei sich der vertiefte Bereich (18) in der Höhenrichtung bis unter eine Position in der Höhenrichtung der Kippkante (4) nach unten erstreckt, wobei sich der vertiefte Bereich (18) entlang der Grenzfläche (13) über die gesamte Breite derselben zwischen den Säulenteilen (11), einschließlich der konkav gekrümmten Übergangsabschnitte (16) derselben, erstreckt und an dieselbe angrenzt.

2. Quersegment (1) nach Anspruch 1, **dadurch gekennzeichnet, dass** die Dicke des Quersegments (1) an dem vertieften Bereich (18) zwischen 0,02 mm und 0,25 mm weniger und vorzugsweise zwischen 0,05 mm und 0,1 mm weniger als an der Kippkante (4) beträgt.

3. Quersegment (1) nach einem der vorhergehenden Ansprüche, **dadurch gekennzeichnet, dass** der vertiefte Bereich (18) in der Breitenrichtung nahtlos in andere Teile des Quersegments (1) durch einen Teilbereich (18a) des vertieften Bereichs (18) übergeht und damit eine Dickenreduzierung bereitstellt, die sich nach und nach von einer durch den vertieften Bereich (18) bereitgestellten Nenndickenreduzierung bis Null verringert.

4. Quersegment (1) nach Anspruch 3, **dadurch gekennzeichnet, dass** sich der Teilbereich (18a) des vertieften Bereichs (18) in der Breitenrichtung über wenigstens die Breite der Übergangsabschnitte (16) der Grenzfläche (13) erstreckt.

5. Quersegment (1) nach einem der vorhergehenden Ansprüche, **dadurch gekennzeichnet, dass** der vertiefte Bereich (18) in der vorderen Fläche (2) des Quersegments (1) vorgesehen ist und dabei die Kippkante (4) unterbricht und sie in wenigstens zwei Abschnitte (4-a, 4-b) unterteilt.

6. Quersegment (1) nach Anspruch 5, **dadurch gekennzeichnet, dass** sich die Kippkante (4) in der Höhenrichtung zum Teil in den Säulenteilen (11) und zum Teil in dem Basisteil (10) erstreckt.

7. Quersegment (1) nach einem der vorhergehenden Ansprüche, **dadurch gekennzeichnet, dass** ein Flächenteil (19) der vorderen Fläche (2), der den vertieften Bereich (18) darstellt, zu der hinteren Fläche (3) hin abgewinkelt ist, von der Grenzfläche (13) aus nach unten in der Höhenrichtung gesehen.

8. Quersegment (1) nach Anspruch 7, **dadurch gekennzeichnet, dass** die Fläche (19) des vertieften Bereichs in einem Winkel im Bereich von ca. 3 bis ca. 4 Grad relativ zu der hinteren Fläche (3) hin abgewinkelt ist.

## Revendications

1. Segment transversal (1) pour une courroie d'entraînement (50) comportant une pile d'anneaux (8) et un certain nombre de segments transversaux (1) qui sont disposés coulissants sur la pile d'anneaux (8), lequel segment transversal (1) s'étend dans le sens de l'épaisseur entre une surface avant (2) et une surface arrière (3) et lequel segment transversal (1) comprend une partie de base s'étendant dans la largeur (10), deux parties piliers (11) s'étendant vers le haut dans le sens de la hauteur depuis chaque côté de la partie de base (10), et deux parties crochets (9), chacune s'étendant depuis une partie pilier respective (11) dans la direction générale de l'autre partie pilier (11), le segment transversal (1) est muni d'un bord oscillant (4), sous la forme d'une partie courbe convexe s'étendant dans la largeur de la surface avant (2), et sa partie de base (10) est munie d'une surface limite orientée vers le haut (13) entre les parties piliers (11), ayant une section médiane située au centre (15), pour venir en contact avec la pile d'anneaux (8) dans la courroie d'entraînement (50) et ayant deux sections de transition au moins en partie courbes et concaves (16), placées une sur chaque côté de la section médiane (15) pour être reliées à une surface latérale (17) d'une partie de pilier respective (11) orientée vers l'ouverture centrale (5), laquelle partie de base (10) est en outre munie d'une zone creusée (18) d'épaisseur réduite localement du segment transversal (1) entre la surface avant (2) et la surface arrière (3) de celui-ci, laquelle zone creusée (18) est adjacente à la section médiane (15) de la surface limite (13) et laquelle zone creusée (18) s'étend vers le bas dans le sens de la hauteur vers le dessous d'une position dans le sens de la hauteur du bord oscillant (4), dans lequel la zone creusée (18) s'étend le long et est adjacente à la surface limite (13) sur toute la largeur de celle-ci entre les parties piliers (11) incluant lesdites sections de transition concaves courbes (16).

2. Segment transversal (1) selon la revendication 1, **caractérisé en ce que** l'épaisseur du segment transversal (1) au niveau de la surface creusée (18) est inférieure à l'épaisseur au niveau du bord oscillant (4) de 0,02 mm à 0,25 mm et de préférence de 0,05 mm à 0,1 mm.

3. Segment transversal (1) selon une revendication précédente, **caractérisé en ce que**, dans le sens de la largeur, la zone creusée (18) fusionne facilement avec d'autres parties du segment transversal (1) par l'intermédiaire d'une zone secondaire (18a) de la zone creusée (18) produisant une réduction de l'épaisseur qui diminue graduellement d'une réduction d'épaisseur nominale produite par la zone creusée (18) jusqu'à zéro.

4. Segment transversal (1) selon la revendication 3, **caractérisé en ce que**, dans le sens de la largeur, la zone secondaire (18a) de la zone creusée (18) s'étend sur au moins la largeur des sections de transition (16) de la surface limite (13).

5. Segment transversal (1) selon une revendication précédente, **caractérisé en ce que** la zone creusée (18) est placée dans la surface avant (2) du segment transversal (1), interrompant le bord oscillant (4) et le divisant en au moins deux sections (4-a, 4-b).

6. Segment transversal (1) selon la revendication 5, **caractérisé en ce que**, dans le sens de la hauteur, le bord oscillant (4) s'étend en partie dans les parties piliers (11) et en partie dans la partie de base (10).

7. Segment transversal (1) selon une revendication précédente, **caractérisé en ce qu'**une partie de surface (19) de la surface avant (2) constituant la zone creusée (18) forme un angle en direction de la surface arrière (3), vue depuis la surface limite (13) vers le bas dans le sens de la hauteur.

8. Segment transversal (1) selon la revendication 7, **caractérisé en ce que** la surface (19) de zone creusée forme un angle d'environ 3 à environ 4 degrés par rapport à la surface arrière (3).
